(19) Europäisches Patentamt
European Patent Office
Office européen des brevets

(11) EP 2 719 500 A1

(12) EUROPEAN PATENT APPLICATION
published in accordance with Art. 153(4) EPC

(43) Date of publication:
16.04.2014 Bulletin 2014/16

(51) Int Cl.:
B23Q 41/02 (2006.01)          B23Q 7/14 (2006.01)

(21) Application number: 12796488.0

(22) Date of filing: 25.05.2012

(86) International application number:
PCT/JP2012/063461

(87) International publication number:
WO 2012/169374 (13.12.2012 Gazette 2012/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 08.06.2011 JP 2011127897

(71) Applicant: Murata Machinery, Ltd.
Kyoto-shi, Kyoto 601-8326 (JP)

(72) Inventor: KAWAI, Hidetsugu
Inuyama-shi
Aichi 484-8502 (JP)

(74) Representative: Beck, Alexander
Hansmann & Vogeser
Patent- und Rechtsanwälte
Maximilianstrasse 4b
82319 Starnberg (DE)

(54) WORKPIECE-PROCESSING SYSTEM

(57) A workpiece processing system may be provided which includes an installation (2) having a plurality of process units (1) integrated such that the units (1) are reconfigurable on a unit-by-unit basis, and also includes a loader (3) that transfers a workpiece (W). Each of the units (1) has one or more positioning point (P) for the loader (3), at which the loader (3) may be positioned by a controller (4). Each one of the units (1) includes a marker (M) indicating a reference point ($O_U$) in the each one of the units (1). A reader (21) in the loader (3) reads the marker (M) to determine a location of the reference point ($O_U$). The controller (4) includes memories (31, 33) which store a relative location of the positioning point(s) (P) and the location of the reference point ($O_U$) determined by the reader (21) in the each one of the units (1).

Fig. 1

EP 2 719 500 A1

**Description**

CROSS REFERENCE TO THE RELATED APPLICATIONS

This application is based on and claims the Convention priority to Japanese patent application No. 2011-127897, filed June 8, 2011, the entire disclosure of which is herein incorporated by reference as a part of this application.

BACKGROUND OF THE INVENTION

(Field of the Invention)

The present invention relates to a workpiece processing system that includes an installation of a plurality of process units (process modules), in which the process units are reconfigurable on a unit-by-unit basis. Reconfiguration, such as addition to, removal of or switching in position, of the process units is possible on a unit-by-unit basis. The process units may include a machine tool and its peripheral machines such as a measuring machine.

(Description of Related Art)

With increase in low-volume, high-variety production, there exists a demand for a freely reconfigurable production line. In response to such a demand, a production line system is proposed in which a machine tool and its various peripheral machines may be configured as freely reconfigurable process units that allow addition to, removal of or switching in position of the process units to be carried out on a unit-by-unit basis, while incorporating into the system a workpiece transfer robot (see the Patent Document 1 listed below). An installation of a machine tool and its various peripheral machines, though not configured as reconfigurable units, may be combined with a gantry loader that transfers a workpiece to and from the machine tool and its peripheral machines (see the Patent Document 2 listed below).

[Patent Document 1] JP Laid-open Patent Publication No. H07-001298
[Patent Document 2] JP Laid-open Patent Publication No. H05-208335

SUMMARY OF THE INVENTION

In an installation of a machine tool and its peripheral machines, when configured as reconfigurable units, a network communication may be employed to connect the machine tool and its peripheral machines with each other. Hence, a communication cable may be the only visible component connecting these different units. This configuration may be easily constructed. Each of such reconfigurable process units made up of a machine tool and its peripheral machines may have a positioning point which may be taught to a loader as a point at which the loader transfers a workpiece to and from the corresponding one of the process units. If the process units are reconfigured, it may be necessary to re-teach the loader such a positioning point. Moreover, certain types of process units may have a plurality of positioning points.

In the past, whenever reconfiguration takes place in an installation of process units, a loader would be taught each of the positioning points in the process units one-by-one, thereby requiring lots of time and efforts. Enhanced reconfiguration efficiency in an installation may be one of the biggest advantages accorded by the aforementioned reconfigurable units. To maximize that advantage, a more efficient measure may be necessary to teach positioning points in the process units to a loader.

An object of the present invention is to provide a workpiece processing system that includes an installation of process units and also includes a loader, which may provide a more efficient measure to teach positioning points in the process units to the loader if reconfiguration takes place in the installation.

Reference signs that are used in the description of embodiments may also be used in the following description of a workpiece processing system according to the present invention.

The present invention may provide a workpiece processing system that includes an installation (2) having a plurality of process units (1, $1_A$......). The process units (1, $1_A$......) are integrated such that addition to, removal of or switching in position of the process units (1, $1_A$......) is possible on a unit-by-unit (1) basis. Each of the process units (1, $1_A$......) is configured to be used to implement a processing of a workpiece (W). The workpiece processing system also includes a loader (3) configured to transfer the workpiece (W) to and from the process units (1). The workpiece processing system also includes a loader controller device (4) configured to control the loader (3). Each of the process units (1) has a positioning point (P) for the loader (3), to and from which the loader (3) transfers the workpiece (W) under control of the loader controller device (4). At least one process unit (1) of the process units (1) has a plurality of the positioning points (P). The at least one process unit includes a marker (M) indicating a reference point ($O_U$) in the at least one process unit (1). The loader (3) includes a marker reader (21) configured to read the marker (M) of the at least one process unit to determine a location of the reference point ($O_U$) in the at least one process unit. The loader controller device (4) includes a relative locations memory unit (31) configured to store a relative location of the positioning point(s) (P) with respect to the reference point ($O_U$) indicated by the marker (M) of the each one of the process units (1). The loader controller device (4) is configured to calculate, based on the location of the reference point ($O_U$) in the at least one process unit as read and determined by the marker reader (21) and on the relative location of the positioning point(s) as stored in the relative locations memory unit, a location of the positioning point(s) (P) in a loader's coordinate system. The loader controller device (4) is also configured to position the loader (3) at the calculated location of the positioning point(s) (P) in the loader's coordinate system.

The term "processing" in the aforementioned phrase "...configured to be used to implement a processing of a workpiece" may be any process that can be applied to a workpiece, such as machining, measuring, cleaning or washing, storing, placing, and retrieving. Also, the term "used" in the aforementioned phrase not only implies that a process unit (1) may actively operate to implement a processing of a workpiece (W), but also implies that a process unit (1) may play a passive role and other feature or component such as a loader (3) may actively operate to implement a processing of a workpiece (W) such as placing a workpiece (W) onto a process unit (1).

In the aforementioned configuration, if the process units (1) in the installation (2) are reconfigured through addition, removal or switching in position, the loader (3) may be caused to be moved to allow the marker reader (21) to read the marker (M) of each one of the process units (1) to determine a location of the reference point ($O_U$) in the each one of the process units (1). The relative locations memory unit (31) may store a relative location of the positioning point(s) (P) with respect to the reference point ($O_U$) indicated by the marker (M) of the each one of the process units (1). Such a relative location may be defined and stored in the relative locations memory unit (31) in advance. The loader controller device (4) may use the determined location of the reference point ($O_U$) in the each one of the process units in the loader's coordinate system as well as the predefined relative location of the positioning point(s) (P) with respect to the reference point ($O_U$) in the each one of the process units, to calculate or determine a location of the positioning point(s) (P) in the loader's coordinate system. The loader controller device (4) may also position the loader (3) at the calculated or determined location of the positioning point(s) (P) in the loader's coordinate system. The phrase "loader's coordinate system" used herein refers to a coordinate system that may be employed to control the position of the loader. The loader's coordinate system may have three coordinate axes that define a travel direction of the loader (i.e., X-axis direction), a vertical direction of the loader (i.e., Y-axis direction) and an advance and retraction direction of the loader (i.e., Z-axis direction), respectively.

The loader controller device (4) may, each time that the loader (3) is caused to be moved to a positioning point (P), determine the coordinate of the location of that positioning point (P) in the loader's coordinate system through computation using the determined location of a reference point ($O_U$) in the corresponding one of the process units (1) as well as the relative location of this particular positioning point (P) with respect to the reference point ($O_U$). The computation may include adding the relative location to the location of the reference point ($O_U$) in the loader's coordinate system. In a variant, the loader controller device (4) may, after determining the location of a reference point ($O_U$) in a process unit (1) in the loader's coordinate system, also perform computation that may include adding the relative location to the location of the reference point ($O_U$) in the loader's coordinate system and may store the computation result in a memory as a coordinate of this particular positioning point (P) in the loader's coordinate system. The loader controller device (4) may use this particular coordinate which is computed and stored in the aforementioned manner to position the loader (3) at the corresponding positioning point (P).

In the aforementioned configuration, each one of the process units (1) includes a marker (M) indicating a reference point ($O_U$) in the each one of the process units (1), and a relative location of the positioning point(s) (P) with respect to the reference point ($O_U$) in the each one of the process units (1) may be defined and stored in advance. Thus, reading a marker (M) in a process unit (1) allows for determining the coordinate of the location of the positioning point(s) in this particular process unit (1) in the loader's coordinate system. In this way, a workpiece processing system that includes an installation (2) of process units and also includes a loader (3) may provide a more efficient measure to teach a plurality of positioning points (P) in the process units (1) to the loader (3) if reconfiguration takes place in the installation (2).

The aforementioned configuration may require a relative location of positioning point(s) (P) with respect to a reference point ($O_U$) in a process unit to be defined and stored in the relative locations memory unit (31). In other words, teaching of a location of positioning point(s) (P) with respect to a reference point ($O_U$) in a process unit may be required. Yet, such a teaching operation can be done, for example, at a factory where a workpiece processing system is manufactured, and no additional teaching operation may be necessary each time reconfiguration takes place in the installation. Furthermore, similar or common markers (M) may be used among different process units (1) for recognition of a reference point ($O_U$). This is much simpler than having to recognize and distinguish positioning points with different shapes, locations and orientations.

In the present invention, the marker reader (21) may include a camera (41) configured to capture an image of the marker (M) from a vertically upward position and may also include an image processor (42) configured to process the image captured by the camera (41) to determine a vertical location of the marker (M). In the image captured by the camera (41) from a vertically upward position, the size of a marker (M) may change depending on the relative vertical position of the camera (41) with respect to the marker (M). The vertical position of the camera (41) can be predetermined. Thus, the relative vertical location of a marker (M) with respect to the camera (41) can be calculated through image processing, based on the size of the marker (M) in the image captured by the camera (41). This facilitates, when determining a reference point ($O_U$) in a process unit (1) for the purpose of teaching of positioning point(s) (P) in the process unit (1), determination of the vertical location of a marker (M) of a process unit (1), thus in turn facilitating teaching of the vertical location of that/those positioning point(s).

In the present invention, the marker (M) may include a protrusion (Mp) extending vertically upwards, wherein the marker reader (21) may include a camera (41) configured to capture an image of the marker (M) and may also include an image processor (42) configured to process the image captured by the camera (41) to determine a location of the reference point ($O_U$), and wherein the loader controller device (4) may include a corrector (54) configured to cause the loader (3) to be moved to the determined location of the reference point ($O_U$), to cause the loader (3) to be adjustably moved such that the loader (3) takes a position where the loader (3) couples with the protrusion (Mp) without receiving any reaction force from the protrusion (Mp), and to confirm a location of the position taken by the loader (3) as a location of the reference point ($O_U$).

Reading and image processing of the marker (M) may not be sufficient to perform precise determination of the location of a reference point ($O_U$) in a process unit, though this may depend on the pixel counts of the camera (41), the performance of the camera (41), and the processing capability of the image processor (42). In such a case, the loader (3) may be caused to be moved to a location of the reference point ($O_U$) in the loader's coordinate system as determined by the image processor (42), and may be caused to be adjustably moved such that the loader (3) takes a position where the loader (3) couples, through gripping, with the protrusion (Mp) without receiving any reaction force from the protrusion (Mp). This enables precise determination of the location of the reference point ($O_U$), based on the position taken by the loader (3) where the protrusion (Mp) is gripped. The corrector (54) may confirm a detected location of the position taken by the loader (3) where the protrusion (Mp) is gripped, as a location of the reference point ($O_U$). Such a configuration of causing the loader (3) to couple, through gripping, with the protrusion (Mp) enables much more precise determination of a reference point in a process unit (1).

In the present invention, the marker (M) may include a marker segment (Mb, Mc) indicating the reference point ($O_U$) in a corresponding one of the process units (1), may also include a marker segment (Mb, Mc) indicating an orientation of the corresponding one of the process units (1), and may also include a marker segment (Md) indicating a type of the corresponding one of the process units (1), and wherein the marker reader (21) may be configured to read the marker (M) to identify an angular offset of and a type of the corresponding one of the process units (1), in addition to determining a location of the reference point ($O_U$). Such a configuration allows for identifying a reference location in, an orientation of and a type of a process unit (1) to perform teaching of a location of positioning point(s) (P) in this particular process unit (1). In this way, reading the maker (M) allows for identification of a process unit (1). This enables, when storing a relative location in the relative locations memory unit (31), automatically determining a process unit (1) with which this particular relative location may be stored in association.

In the present invention, the marker segment (Mb, Mc) may include two marker lines (Mb, Mc) extending along two adjacent sides of an oblong marker substrate (Ma), directions in which the two marker lines (Mb, Mc) extend may indicate an orientation of the corresponding one of the process units (1), and a right-angled intersection of the two marker lines (Mb, Mc) may indicate the reference point ($O_U$). This enables indicating, with a simple configuration, the location of a reference point ($O_U$) in a process unit (1) as well as the orientation of this particular process unit (1).

In the present invention, preferably, the marker (M) further includes an auxiliary marker segment (Me) configured to provide assistance in the event that precise determination of a location of the reference point ($O_U$) is not possible with the marker segment(s) (Mb, Mc) alone. Such a configuration allows for accurately determining the location of a reference point ($O_U$) with the aid of the auxiliary marker segment (Me), even if precise determination of the location of this particular reference point ($O_U$) is not possible with the marker segment(s) (Mb, Mc) alone.

In the present invention, in a configuration where the marker reader (21) includes a camera (41) configured to capture an image of the marker (M) and also includes an image processor (42) configured to process the image captured by the camera (41) to determine a location of the reference point ($O_U$), the camera (41) may be detachable with respect to the loader (3), wherein the camera (41) may include a transmitter (44) configured to wirelessly transmit the captured image, and wherein the image processor (42) may be configured to process the captured image that is transmitted by the transmitter (44).

In such a configuration, the camera (41) that may be used to read the marker (M) may not be permanently mounted to the loader (3). Instead, the loader (3) may carry the camera (41) only when it is necessary to determine a location of reference point(s), such as in response to reconfiguration in the installation (2) of the process units. This can prevent dirt or debris from depositing on the camera (41) due to a process or processes taking place in the installation

(2) of the process units. For instance, when a process or processes taking place in the installation (2) of the process units is/are machining, cleaning and/or washing, a camera (41) permanently mounted to the loader (3) may be subject to dirt or debris that may be generated by that process or those processes. In contrast, the aforementioned configuration where the camera (41) is detachable can avoid deposition of such dirt or debris. The aforementioned configuration where the camera (41) is detachable can also prevent the camera (41) from disturbing the normal operation of the loader (3). Furthermore, in the aforementioned configuration, a captured image may be wirelessly transmitted. This can eliminate the need to arrange wirings for the camera (41) along the travel path of the loader.

The present invention encompasses any combination of at least two features disclosed in the claims, the specification and/or the drawings. In particular, the present invention encompasses any combination of at least two claims.

BRIEF DESCRIPTION OF THE DRAWINGS

In any event, the present invention will become more clearly understood from the following description of embodiments thereof, when taken in conjunction with the accompanying drawings. However, the embodiments and the drawings are given only for the purpose of illustration and explanation, and are not to be taken as limiting the scope of the present invention in any way whatsoever, as defined by the appended claims. In the accompanying drawings, like reference numerals are used to denote like parts throughout the several views, and:

Fig. 1 is a block diagram of a schematic configuration of a workpiece processing system according to the first embodiment of the present invention;
Fig. 2A is a block diagram of a schematic configuration of a loader controller device for the workpiece processing system of Fig. 1;
Fig. 2B is a block diagram of a schematic configuration of a markers and process units association memory for the loader controller device of Fig. 2A;
Fig. 2C is a block diagram of a schematic configuration of a subprograms memory segment for the loader controller device of Fig. 2A;
Fig. 3 is a front elevational view showing the relationship between a primary process unit and a loader in the workpiece processing system of Fig. 1;
Fig. 4 is an enlarged side view of a loader head of the loader of Fig. 3 and its environment;
Fig. 5 is an explanatory diagram of a loader program for the workpiece processing system of Fig. 1;
Fig. 6 is a top plan view of an example of a process unit for the workpiece processing system of Fig. 1;
Fig. 7A is a perspective view showing the relationship between a marker and a marker reader for the workpiece processing system of Fig. 1;
Fig. 7B is an explanatory view of an installation angle of the marker of Fig. 7A;
Fig. 8A is a top plan view showing the relationship between the process unit of Fig. 6 and its associated marker;
Fig. 8B is another top plan view showing the relationship between the process unit of Fig. 6 and its associated marker;
Fig. 9A is an explanatory view showing the relationship between a loader and a marker reader including a camera for the workpiece processing system of Fig. 1;
Fig. 9B is an explanatory view showing the relationship between the camera of Fig. 9A and a loader controller device;
Fig. 10 is a general flow chart showing a teaching operation in response to reconfiguration in an installation of process units for the workpiece processing system of Fig. 1;
Fig. 11 is a flow chart showing how a teaching operation of the location of positioning point(s) may be carried out at a factory before shipping the workpiece processing system of Fig. 1;
Fig. 12 is a flow chart showing how teaching procedures of the location of positioning point(s) may be carried out after shipping and installing the workpiece processing system of Fig. 1;
Fig. 13 is a flow chart showing how teaching procedures of the location of positioning point(s) may be carried out in response to reconfiguration in an installation of process units for the workpiece processing system of Fig. 1; and
Fig. 14 is a front elevational view of a process unit for a workpiece processing system according to the second embodiment of the present invention.

DESCRIPTION OF THE EMBODIMENTS

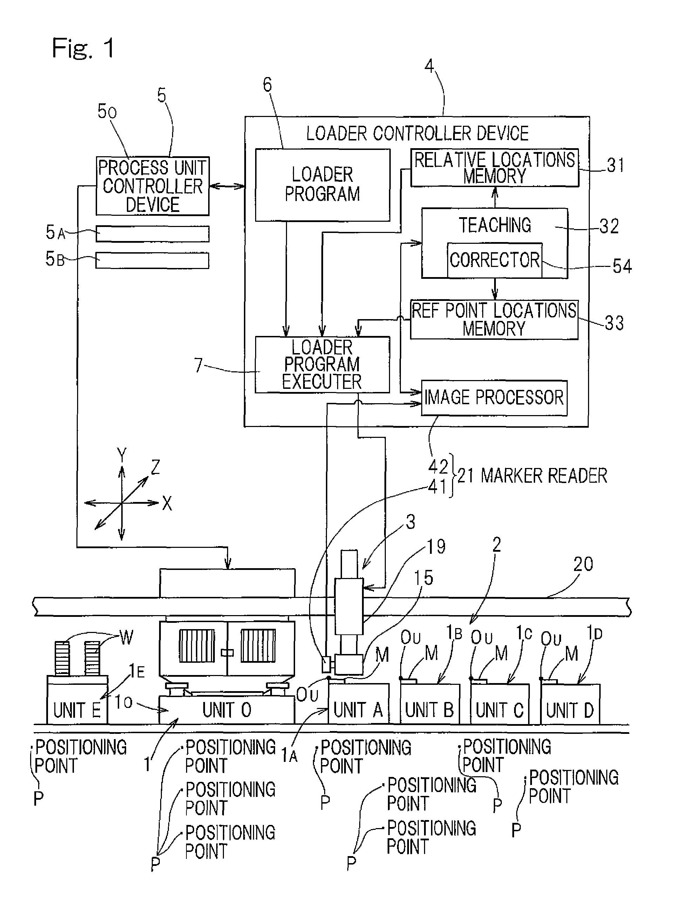

The first embodiment of the present invention will be described in connection with Fig. 1 to Fig. 13. The illustrated workpiece processing system includes an installation 2 having a plurality of process units 1 ($1_0$, $1_A$...$1_E$), a loader 3 and a loader controller device 4. The process units 1 ($1_0$, $1_A$...$1_E$) are integrated into the installation 2 such that addition to, removal of or switching in position of the process units 1 ($1_0$, $1_A$...$1_E$) is possible on a unit-by-unit basis. The process units 1 ($1_0$, $1_A$...$1_E$) may include one or more process units that are associated with respective process unit controller devices 5 ($5_0$, $5_A$, $5_B$) to implement control required by the one or more process units.

Each of the process units 1 may be configured to implement a certain processing of a workpiece W. In the installation 2, addition to, removal of or switching in position of the process units 1 may be possible on a unit-by-unit basis. Hence, the process units 1 may be reconfigured on a unit-by-unit basis to change the arrangement of the components of the installation 2. The components of the installation 2 may be arranged in the form of a line. The term "processing" used herein may be any process that can be applied to a workpiece W, such as machining, measuring, cleaning or washing, storing, placing, and retrieving. A process unit 1 may encompass a process unit that does not play an active role in implementing a process. For example, a process unit 1 may merely serve to provide a platform onto which a workpiece W may be placed.

The process units 1 in the installation 2 may be arranged at respective predetermined installation locations on a floor surface of a factory in a line to form a single row. In the illustrated example, at lateral sides of a primary process unit $1_0$ on the page, as viewed along the direction (i.e., X-axis direction) in which the process units 1 are arranged in line, other process units $1_E$, $1_A$...$1_D$ are installed. The primary process unit $1_0$ may be a machine tool which may include, in particular, a turning machine or lathe. On the left lateral side of the primary process unit $1_0$ on the page, as viewed along the direction in which the process units 1 are arranged in line, a process unit $1_E$ may be installed which may provide a workpiece feeder platform on which the workpiece W may be placed. On the right lateral side of the primary process unit $1_0$ on the page, a process unit $1_A$ which may be a cleaning or washing machine, a process unit $1_B$ which may be a measuring machine, a process unit $1_C$ which may be a first stocker machine, and a process unit $1_D$ which may be a second stocker machine may be installed in this order.

A process unit 1 may have one or more positioning points P, to which the loader 3 may be caused to be moved and at which the loader 3 may be positioned. At least one process unit of the process units 1 may have a plurality of the positioning points P.

The loader 3 may be configured to transfer a workpiece W from and to the process units 1 ($1_0$, $1_A$...$1_E$) in the installation 2. For example, the loader 3 may be a gantry loader that includes a rail 20 and a loader carrier 19 moveably arranged on the rail 20. The rail 20 may extend over the process units 1. The loader carrier 19 may move on the rail 20 while supporting a gripped workpiece W.

The loader controller device 4 is configured to control the loader 3. The loader controller device 4 may be a computerized controller device configured to control the loader 3. Such a computerized controller device may be a programmed controller device that may include a programmable controller. In principle, the loader controller device 4 may include a loader program executer unit 7 which may be configured to interpret and execute a loader program 6 to carry out sequence control of the loader 3. The loader controller device 4 may include a computer and program(s) that may be executed by the computer. Such a computer and program(s) may constitute functional units which will be discussed later in detail. The loader program executer unit 7 may be one of those functional units. The primary process unit $1_0$ which may be a machine tool may be associated with a process unit controller device $5_0$ which may be configured to control the machine tool. The process unit controller device $5_0$ may be a computerized numerical controller device. The process unit controller devices 5 and the loader controller device 4 may be configured to communicate to each other signals indicating the start and/or completion of respective operations, so that they cooperate with each other at proper timings.

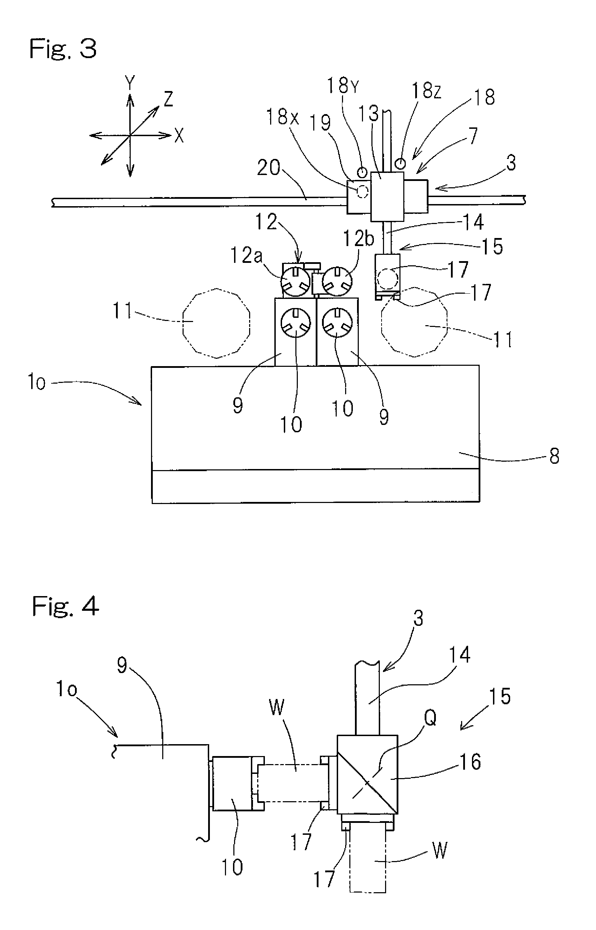

Fig. 3 and Fig. 4 illustrate a particular configuration that the primary process unit $1_0$ and the loader 3 may take. The illustrated primary process unit $1_0$ may include a twin-spindle turning machine or lathe. The twin-spindle turning machine may include a bed 8, two headstocks 9 on the bed 8, spindles 10, 10 supported by the respective headstocks 9 so as to extend in an advance and retraction direction of the loader 3 (i.e., Z-axis direction), and turret tool posts 11, 11 arranged at lateral opposite sides of the spindles 10, 10. Each of the spindles 10, 10 may have a spindle nose associated with a chuck, which can be seen in Fig. 3. The twin-spindle turning machine may also include a workpiece inversion mechanism 12 which may include two chucks 12a, 12b arranged over the spindles 10, 10. The workpiece inversion mechanism 12 may be configured to operate in such a way to cause the two chucks 12a, 12b to confront each other and to cause one of the chucks 12a, 12b to pass the workpiece W to the other of the chucks 12a, 12b, to invert or flip around the workpiece W.

The loader 3 may include a rail 20 and a loader carrier 19 moveably arranged on the rail 20. The rail 20 may extend from the left side to the right side or vice versa on the page (i.e., X-axis direction). The loader carrier 19 may be coupled with a forward and rearward moveable member 13 that may be configured to move from the front side to the rear side or vice versa on the page (i.e., Z-axis direction). The forward and rearward moveable member 13 may be coupled with an extendable rod 14 that may be configured to move in a vertical direction (i.e., Y-axis direction). The extendable rod 14 may have an end coupled with a loader head 15. The loader 3 may be associated with a servo-motor (not shown) that may be configured to move the loader 3 along the respective axes. The loader 3 may be associated with position sensors 18 ($18_X$, $18_Y$, $18_Z$) that may be configured to sense the position of the loader 3 along the respective axes (i.e., an X-axis position, a Y-axis position and a Z-axis position of the loader 3, respectively).

Referring to Fig. 4, the loader head 15 may include a swivel base 16 that may be configured to swivel about a slant, swivel central axis Q. The swivel base 16 may include chucks 17, 17 that may be each configured to grip the workpiece W. The chucks 17, 17 may be associated with a front surface (i.e., a surface that confronts the headstock(s) 9) and a bottom surface of the swivel base 16, respectively. The swivel base 16 may be configured to swivel to switch the position of the chuck 17 associated with the bottom surface and the position of the chuck 17 associated with the front surface.

Referring to Fig. 1, in addition to the aforementioned basic configuration of the illustrated workpiece processing system, each one of the process units 1 may include a marker M indicating a reference point $O_U$ in the each one of the process units 1. The loader 3 may include a marker reader 21 configured to read the marker M of the each one of the process units 1. More specifically, the marker reader 21 may include a camera 41 configured to capture an image and may also include an image processor 42 configured to process the image captured by the camera 41. The camera 41 may be mounted to the loader head 15 of the loader 3. The camera 41 may include a solid-state image sensor.

The loader controller device 4 may include, in addition to the loader program executer unit 7, a relative locations memory unit 31, a reference point locations memory unit 33, a teaching unit 32, and the aforementioned image processor 42. These units 31, 32, 33, 42 may serve as members of the aforementioned functional units. The relative locations memory unit 31 may be configured to store, in the form of a coordinate, a relative location of the positioning point(s) P with respect to the reference point $O_U$ indicated by the marker M of the each one of the process units 1. The reference point locations memory unit 33 may be configured to store a location of the reference point $O_U$ indicated by the marker M of the each one of the process units 1 as read and determined by the marker reader 21. The teaching unit 32 may be configured to teach corresponding coordinates to the relative locations memory unit 31 and the reference point locations memory unit 33. The loader controller device 4 may include a single computer or may include a plurality of computers connected with each other via a network. In a variant, the loader controller device 4 may share, in part or entirety, a common computer with the process unit controller device(s) 5.

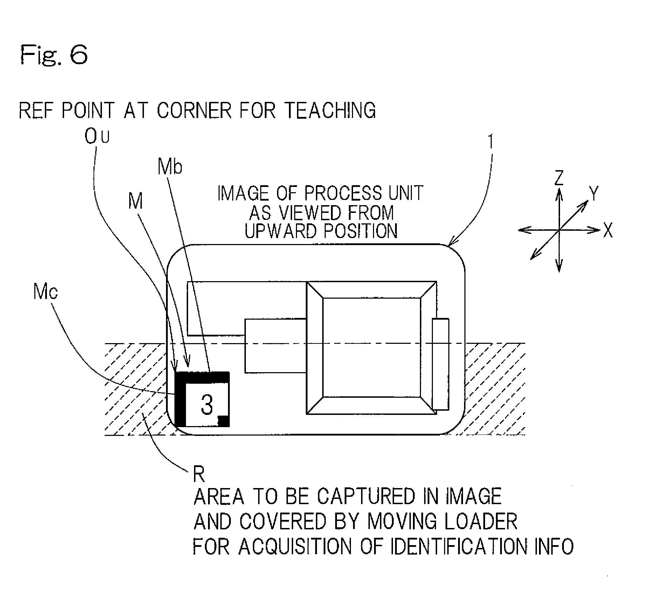

Fig. 6 illustrates a top plan view of an example of a process unit 1 that includes a marker M. The loader 3 may, if a process unit 1 is added or incorporated into the installation 2, be caused to be moved in a travel direction of the loader 3 (i.e., X-axis direction) such that the camera 41 (Fig. 1) mounted to the loader 3 defines a band-shaped area R (i.e., area indicated by diagonal broken lines in Fig. 6) covered by the filed of view of the camera 41. The added or incorporated process unit 1 may include a marker M on an upper surface of the process unit 1, and the marker M may be positioned within the area R. While the loader 3 is being moved in the aforementioned manner, the position of the loader head 15 along the advance and retraction direction of the loader 3 (i.e., the Z-axis position of the loader head 15) and the vertical position of the loader head 15 (i.e., the Y-axis position of the loader head 15) may be kept constant. In the example under discussion, the marker M of a process unit 1 may be located at a corner of a front edge (i.e., a distal edge with respect to the rail 20 (Fig. 1)) as viewed along the advance and retraction direction of the process unit (i.e., Z-axis direction), on one end of the process unit 1 as viewed along the direction of arrangement of the process units 1 (i.e., X-axis direction).

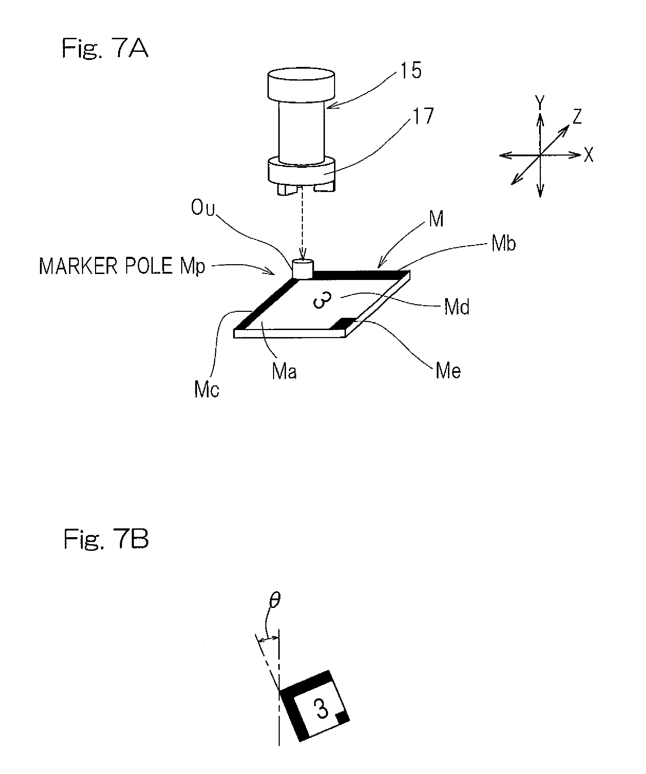

Referring to Fig. 7A, a marker M may be formed on a square or rectangular marker substrate Ma. The marker M may include marker lines Mb, Mc extending along two adjacent sides of the marker substrate Ma. A right-angled intersection of the two marker lines Mb, Mc may indicate a reference point $O_U$. More specifically, the marker lines Mb, Mc may have respective widths. The reference point $O_U$ may be defined by an intersection of the outer edges of the widths of the marker lines Mb, Mc. Each of the marker lines Mb, Mc may have a color (e.g., hue, saturation, or brightness) that is different from those of other segments of the marker substrate Ma.

The marker lines Mb, Mc may form a marker segment indicating an orientation of the corresponding one of the process units 1. Thus, the illustrated two marker lines Mb, Mc may serve both as a marker segment indicating a location and as a marker segment indicating an orientation. The marker M may include an auxiliary marker segment Me. The auxiliary marker segment Me may be located at a corner on the marker substrate Ma, that is diagonally opposite to the reference point $O_U$. The auxiliary marker segment Me may be a square-shaped point located at that corner. The auxiliary marker segment Me may provide assistance as to precise determination of a corner between the marker lines Mb, Mc in the event that such precise determination is not possible with the marker line(s) Mb, Mc alone. Hence, the auxiliary marker segment Me is optional.

The marker M may include a marker segment Md indicating a type of the process unit 1. The marker segment Md may be located on an oblong shaped portion of the marker substrate Ma, that is delimited by the two marker lines Mb, Mc on the two adjacent sides of the marker substrate Ma. The marker segment Md may include a character (e.g., a number), a sequence of characters, or symbol(s). In the figure, the marker segment Md includes a number "3." The marker segment Md indicating a type of a process unit 1 may be such that each of the individual process units 1 has a marker segment Md that is unique to that particular process unit 1. In other words, there may be no duplicate marker segments Md among the individual process units 1 that may be used for identification of a type of the process units 1.

The marker M may include a marker pole Mp at the reference point $O_U$. The maker pole Mp may be in the form of a protrusion extending vertically upwards. The marker pole Mp may have a shape and size that may be grippable with a chuck 17 of the loader 3 (Fig. 7A). The marker pole Mp may have a shape of a cylinder having a vertically extending axis (i.e., Y-axis direction). The location of the axis of the marker pole Mp as measured on a horizontal plane may correspond to the X-axis location and the Z-axis location of the corresponding reference point $O_u$. The marker pole Mp, which may have a predetermined height, may also indicate the vertical location of that reference point $O_u$ (i.e., Y-axis location of that reference point $O_u$). The term "protrusion" used herein is not limited to a pole-shaped protrusion such as the marker pole Mp, but encompasses any shapes that can be coupled with the loader 3. For example, the term "protrusion" used herein encompasses a shape that is grippable with a chuck 17 of the loader 3.

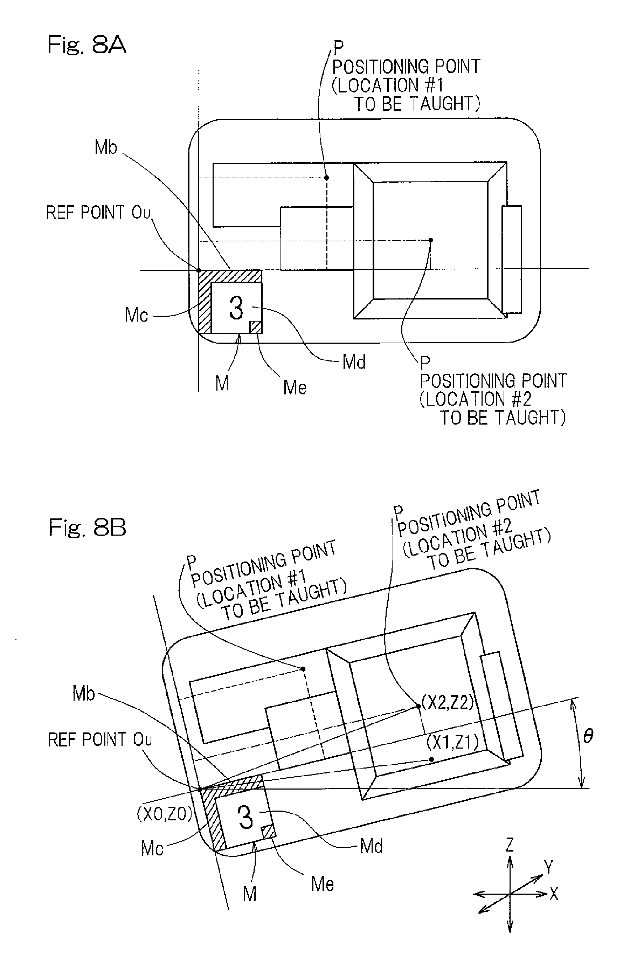

Fig. 8A illustrates the relationship between the reference point $O_U$ of a process unit 1 and the positioning point(s) P in the process unit 1. The relative locations memory unit 31 as shown in Fig. 1 may be configured to store a relative location of positioning point(s) P with respect to a reference point $O_U$ indicated by the marker M of each one of the process units 1. More specifically, the relative locations memory unit 31 may be configured to store a coordinate of positioning point(s) P along the respective axes in each one of the process units 1, in the form of a relative coordinate with respect to a reference point $O_U$ in each one of the process units 1, in a local coordinate system defining a reference point $O_U$ as the origin of the coordinate system. The coordinate in the local coordinate system may only include the locations along two orthogonal axes (i.e., X-axis location and Z-axis location). Preferably, the coordinate in the local coordinate system includes the locations along three orthogonal axes. In the embodiment under discussion, the coordinate in the local coordinate system includes the locations along three orthogonal axes.

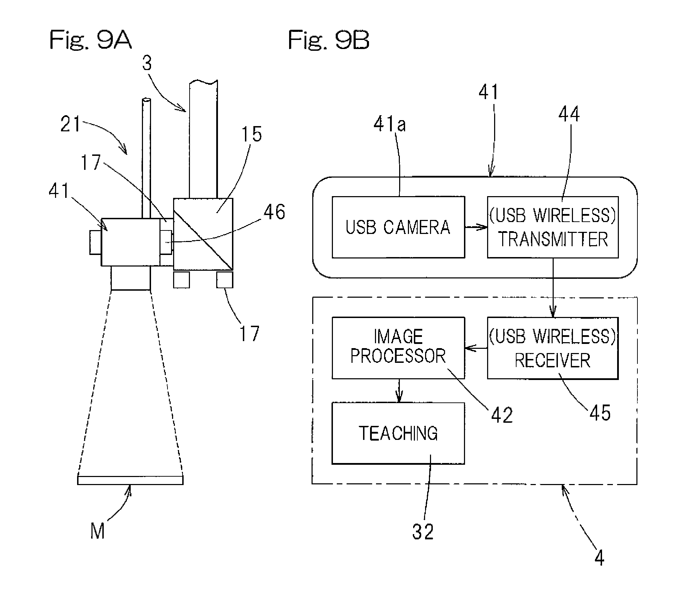

Fig. 9A illustrates a particular configuration that the marker reader 21 may take. The camera 41 of the marker reader 21 may not be permanently mounted to the loader 3 but may be detachable with respect to the loader 3. More specifically, the camera 41 may include, at a side face of the camera 41, a grippable segment 46 which may be in the form of a projection. The grippable segment 46 may be detachably gripped by a horizontally oriented chuck 17 of the loader 3. Referring to Fig. 9B, the camera 41 may be a wireless transmission camera that may include a USB camera 41a configured to produce image data in USB (i.e., Universal Serial Bus) format for output and may also include a transmitter 44 configured to wirelessly transmit the output.

The loader controller device 4 may include a receiver 45 configured to receive the image data transmitted from the transmitter 44 of the camera 41. The image processor 42 may be configured to process the received image data to determine information including the type of a process unit 1, the orientation of the process unit 1 and/or the location of a reference point in the process unit 1. The image processor 42 may be configured to send the determined information to the teaching unit 32. The teaching unit 32 may be configured to perform teaching of the relative locations memory unit 31 and the reference point locations memory unit 33 as shown in Fig. 1, which will be discussed later in detail. Such teaching may include defining the location of reference point(s).

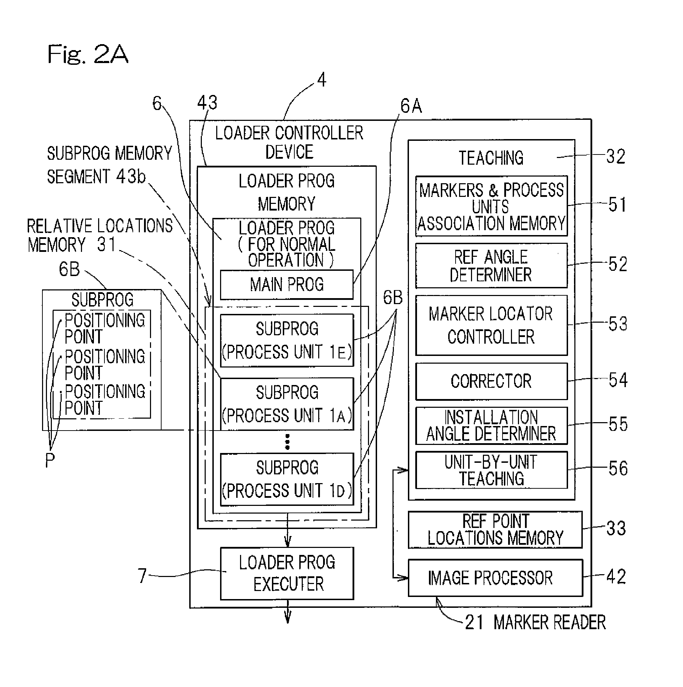

Fig. 2A schematically illustrates a particular configuration that a loader controller device 4 as shown in Fig. 1 may take. A program format that may be employed by the loader controller device 4 will be described. A loader program 6 may be formed of a main program 6A and a plurality of subprograms 6B that may be called by the main program 6A. One or more of the subprograms 6B may be assigned to each of the process units 1 ($1_A$, $1_B$, ......). If reconfiguration, such as addition to, removal of or switching in position, of the process units 1 takes place in the installation 2, an instruction in the main program 6A may be changed as to which one or ones of the subprograms 6B is/are called. However, the subprogram(s) 6B itself or themselves may not be changed.

Each of the subprograms 6B may be a program that controls the loader 3 with respect to the corresponding one of the process units 1. Such a program may include a coordinate of the corresponding positioning point P in a process unit 1 and may also include an instruction that causes the loader 3 to perform the corresponding operation. A subprogram 6B assigned to the corresponding one of the process units 1 may include commands, which are arranged in the order of the operation of the corresponding one of the process units 1. The coordinate of the location of positioning point(s) P in a process unit 1 may be described in a subprogram 6B in the form of a relative location with respect to a reference point $O_U$ in that particular process unit -- in other words, in the form of a coordinate in a local coordinate system defining the reference point $O_U$ as the origin of the coordinate system.

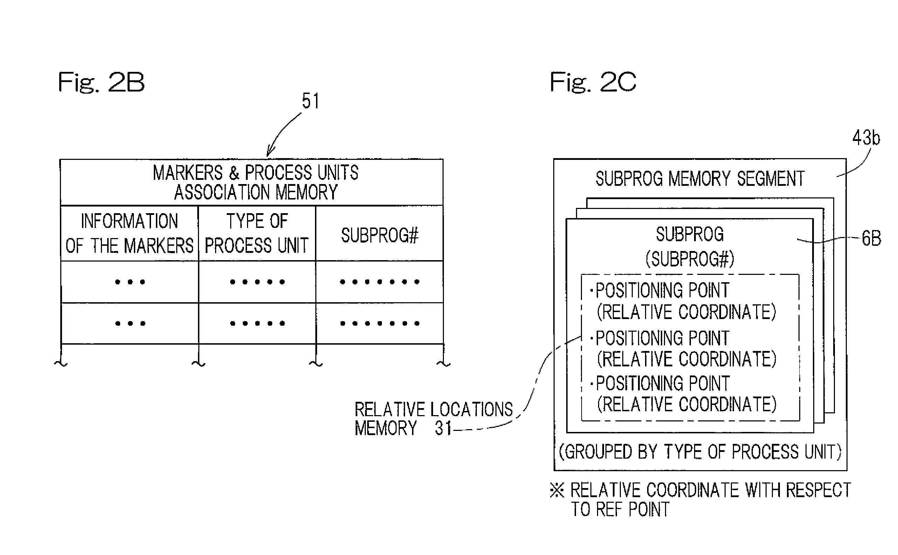

The loader controller device 4 may include a loader program memory 43 that may include a subprograms memory segment 43b. The subprograms memory segment 43b may store the subprograms 6B assigned to the process units 1 in the order of the subprogram numbers that the subprograms 6B may be assigned to, as shown in Fig. 2C. In the embodiment under discussion, the relative locations memory unit 31 such as shown in Fig. 1 may be constituted by memory domain(s) in the subprograms memory segment 43b, that may store positioning points P that may be included in the subprograms 6B. In a variant, the loader program 6 may not, unlike the embodiment under discussion, include subprograms 6B assigned to the process units 1. In such a case, the relative locations memory unit 31 may include a table that is located independently of program(s), which stores the relative location of positioning point(s) P with respect to a reference point $O_U$ in each one of the process units 1. The subprograms 6B stored in the subprograms memory segment 43b may include one or more subprograms assigned to an extra process unit 1 which is not present in the installation 2 of the process units 1.

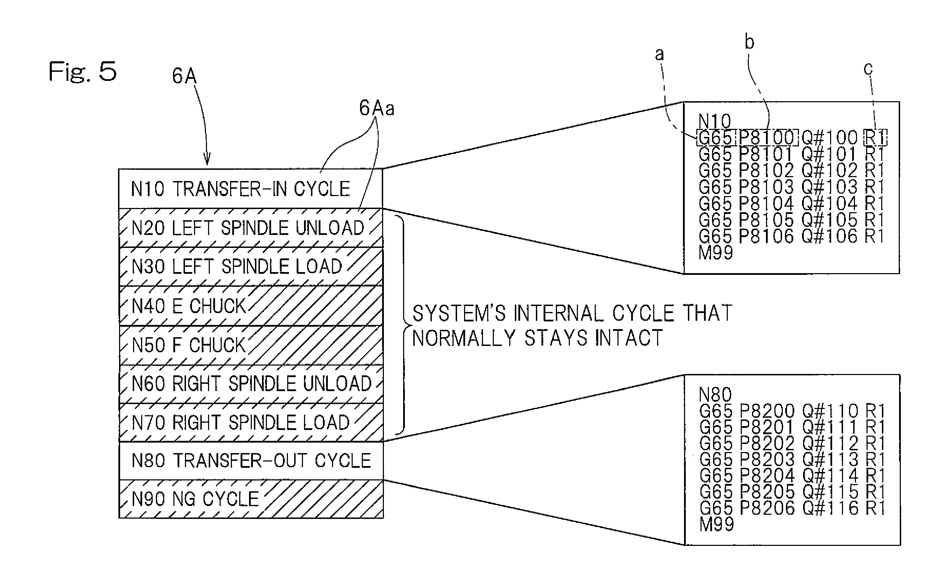

Fig. 5 illustrates a particular configuration that the main program 6A may take. In the example under discussion, a process unit $1_0$ is assumed to include a twin-spindle turning machine or lathe such as shown in Fig. 3 and is configured as a primary process unit in the installation of the process units. Note, however, the process units $1_A$, $1_B$, ... except for the primary process unit $1_0$ may be different process units from the example shown in and described in connection with Fig. 1. In Fig. 5, the phrase "left spindle" may correspond to a spindle 10 on the left side of Fig. 3 on the page, while the phrase "right spindle" may correspond to a spindle 10 on the right side of Fig. 3 on the page. Similarly, the phrase "E chuck" may correspond to a chuck 12a of the workpiece inversion mechanism 12 on the left side of Fig. 3 on the page, while the phrase "F chuck" may correspond to a chuck 12b of the workpiece inversion mechanism 12 on the right side of Fig. 3 on the page.

Referring to Fig. 5, a main program 6A may include a list of cycle programs (cycle numbers N10 to N90) 6Aa. Each of the cycle programs 6Aa may correspond to a set of programs for a given cycle in the operation of the loader 3, with the given cycle including a group of suboperations of the loader 3. A cycle program 6Aa may include one or more program lines, each of which may include an instruction a (e.g., a string "G65" in Fig. 5) that calls a subprogram 6B, a subprogram number b (e.g., a string "P8100" in Fig. 5) of that subprogram 6B, and an instruction c (e.g., a string "R1" in Fig. 5) that may cause a location in the form of a relative coordinate (i.e., a relative location of a positioning point P with respect to a reference point $O_U$) that may be included in that subprogram 6B to be converted into an absolute coordinate in the loader's coordinate system. More specifically, the instruction c may add the relative location of a positioning point P to the location of the corresponding reference point $O_U$ in the loader's coordinate system.

Not all of the instructions that cause the loader 3 to perform the corresponding operations with respect to process units 1 may need to be described in the form of subprograms 6B. For example, one or more instructions that cause the loader 3 to perform the corresponding operations with respect to a primary process unit $1_0$ (e.g., a turning machine or lathe in the illustrated example) may be directly incorporated into the main program 6A. In the example of Fig. 5, instructions for the cycle numbers N20 to N70 are directly incorporated in the main program 6A. This may be attributable to the fact that a primary process unit $1_0$ (i.e., the system's internal cycle) normally stays intact even if reconfiguration takes place in the installation 2 of the process units 1. In the instructions in the main program 6A, coordinate(s) may be described in the form of an absolute coordinate in the loader's coordinate system.

Referring to Fig. 2A, the teaching unit 32 and the reference point locations memory unit 33 will be described. The teaching unit 32 may be configured to perform teaching of the reference point locations memory unit 33 and to perform teaching of the relative locations memory unit 31. The relative locations memory unit 31 may be constituted by memory domain(s) that may store a relative coordinate of positioning points P that may be included in the subprograms 6B. The reference point locations memory unit 33 may include a table that may store the identification information of the process units 1 and the coordinates of the reference points $O_U$ in the process units 1 in the loader's coordinate system in a manner that the identification information and the coordinates are associated with each other.

The teaching unit 32 may include a markers and process units association memory 51, a reference angle determiner 52, a marker locator controller 53, a corrector 54, an installation angle determiner 55 and a unit-by-unit teaching subunit 56.

Referring to Fig. 2B, the markers and process units association memory 51 may include a table that may store the information of the markers, the type of the process units 1 and the subprogram numbers of the subprograms 6B in a manner that the information of the markers, the type of the process units 1 and the subprogram numbers are associated with each other. The "information of the markers" may correspond to the identification information which is the recognition or determination result by the image processor 42 of the marker segments Md of the markers M indicating the type of the corresponding process units, as read by the marker reader 21.

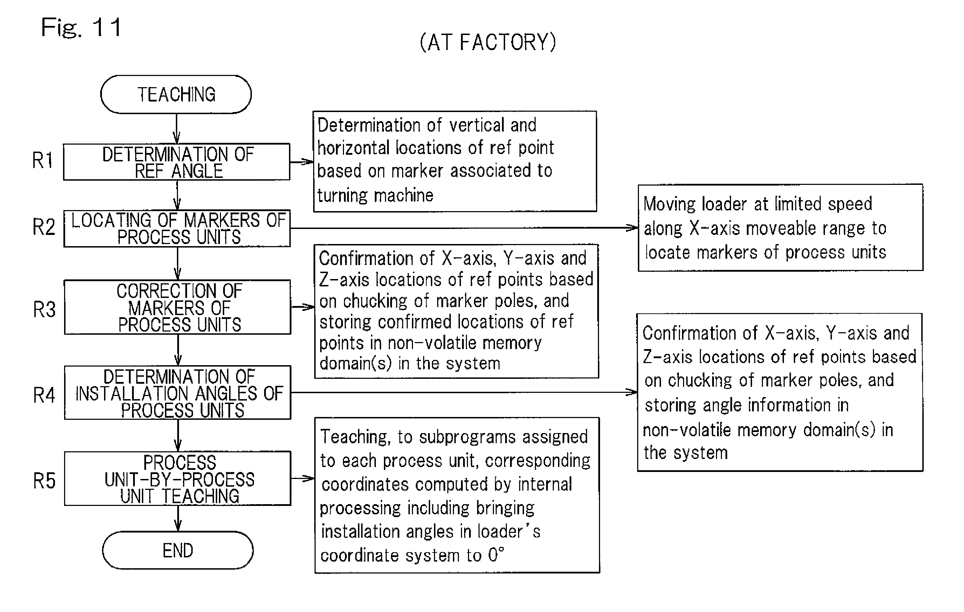

First, the components 52 to 56 except for the markers and process units association memory 51 will be generally described. Then, the details of the components 52 to 56 will be described in connection with the flow charts of Fig. 11 to Fig. 13.

The reference angle determiner 52 may be configured to determine, in the loader's coordinate system, a location of a reference point $O_U$ in a primary process unit $1_0$ as indicated by a marker M of the primary process unit $1_0$. The marker locator controller 53 may be configured to cause the loader 3 to be moved in such a way to allow the marker reader 21 to read markers M of each one of the process units 1.

The corrector 54 may be configured to cause the loader 3 to be moved to a hypothetical location of a reference point $O_U$ as determined by the marker reader 21, to cause the loader 3 to couple with a marker pole Mp or cause a chuck 17 of the loader 3 to grip a marker pole Mp, and to confirm a detected location of the position taken by the loader 3 when the chuck 17 grips the marker pole Mp as a location of this particular reference point $O_U$, in order to enable the resulting location of the reference point $O_U$ to be stored in the reference point locations memory unit 33. The position taken by the loader 3 when the chuck 17 grips the marker pole Mp may be obtained by aligning the loader 3, through gripping, with the location of the marker pole Mp. More specifically, the position taken by the loader 3 may be obtained by causing the loader 3 to be adjustably moved such that the loader 3 takes a position where the loader 3 contacts with the marker pole Mp without receiving any reaction force from the marker pole Mp.

The installation angle determiner 55 may be configured to determine an installation angle of a process unit 1 with respect to a reference angle in the loader's coordinate system, based on the coupling between the loader 3 and the corresponding marker pole Mp or based on the gripping of the corresponding marker pole Mp with a chuck 17 of the loader 3. The unit-by-unit teaching subunit 56 may be configured to teach a coordinate of positioning point(s) P in the process units 1 in the local coordinate system to the subprograms 6B assigned to the process units 1.

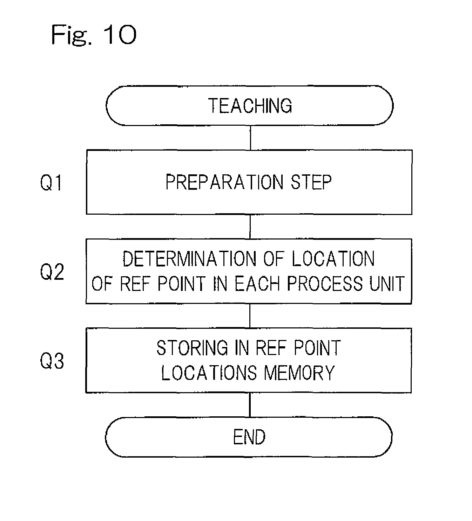

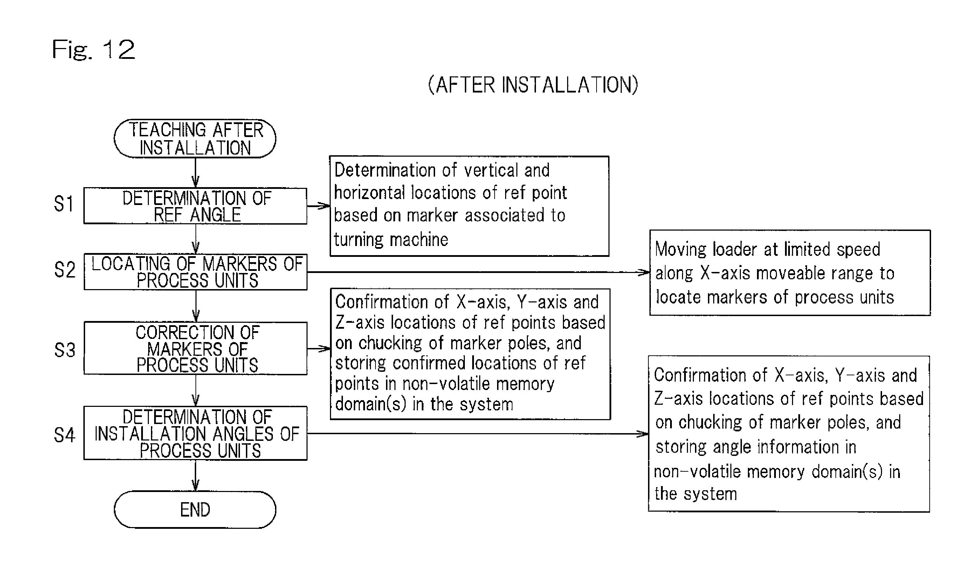

Next, a teaching operation according to the aforementioned configuration will be generally described in connection with a flow chart of Fig. 10. Note that the following discussion assumes that in a preparation step (Q1), a relative location of positioning point(s) P with respect to a reference point $O_U$ in each one of the process units 1 is defined and stored in the relative locations memory unit 31. In other words, the following discussion assumes that positioning point(s) P that may be included in the subprograms 6B assigned to the process units 1 have already been taught to the relative locations memory unit 31 in the local coordinate system. The preparation step (Q1) may take place in a factory as shown in Fig. 11 or after installation as shown in Fig. 12.

Referring to Fig. 10, after the preparation step (Q1), reconfiguration, such as addition to, removal of or switching in position of the process units 1 may take place in the installation 2. In response, in the step of determining a location of a reference point $O_U$ in each one of the process units 1 (Q2), the loader 3, while carrying the camera 41 of the marker reader 21, may be caused to be moved across the process units 1 along a direction in which a plurality of the process units 1 are arranged (i.e., X-axis direction). The loader 3 may be caused to be moved in such a manner by actuating a manual switch on an operation panel of the loader controller device 4. In a variant, the loader 3 may be caused to be moved by the execution of a program (not shown) dedicated to a teaching operation, which may be separate from the loader program 6. While the loader 3 is being moved in the aforementioned manner, the horizontal position (i.e., the position along the advance and retraction direction of the loader 3 or the Z-axis position) and the vertical position (i.e., the Y-axis position) of the camera 41 carried by the loader 3 may be kept constant with respect to the loader carrier 19.

Referring to Fig. 6, a maker M of each one of the process units 1 may be positioned within a band-shaped area R covered by the field of view of the camera 41 that may be carried by the loader 3, so that the camera 41 captures an image of a marker M of each one of the process units 1. The image processor 42 may process the information of the captured image to determine, in the loader's coordinate system, a three-axis coordinate (X-axis, Y-axis, X-axis) of a reference point $O_U$ in the corresponding one of the process units 1 as indicated by the marker M of the corresponding one of the process units 1, in order to enable the three-axis coordinate to be stored in the reference point locations memory unit 33 (this configuration assumes that the coordinate is not corrected based on the gripping of a marker pole Mp). The coordinate of a reference point $O_U$ as viewed on a plane (i.e., the X-axis location and the Z-axis location) may correspond to a coordinate of a right-angled intersection point of the two marker lines Mb, Mc of the marker M. The coordinate of a reference point $O_U$ as viewed along a vertical direction (i.e., the Y-axis location) may be determined based on the relationship between the size of a marker pole Mp in a captured image and the actual size of the marker pole Mp which may be predetermined or can be determined in advance.

The vertical position of the camera 41 when moving together with the loader carrier 19 may be kept constant. The coordinate of the vertical location (i.e., the Y-axis location) of a reference point $O_U$ may be determined based on the relationship between the size of the corresponding marker pole Mp in a captured image and the actual size of that marker pole Mp which may be predetermined or can be determined in advance. The coordinate of the vertical location of the reference point $O_U$ may be determined even when the marker M is a planar marker and does not include a marker pole Mp -- because the size of such a planar marker in a captured image also changes according to the vertical location of the planar marker. The type of a process unit 1 to which the determined reference point $O_U$ belongs may be identified by the image processor 42 based on a marker segment Md of a marker M indicating a type of a process unit 1. The reference point locations memory unit 33 may store the identification information of identified process units 1 and the locations of the corresponding reference points $O_U$ along the respective axes in a manner that the identification information and the locations of the corresponding reference points $O_U$ along the respective axes are associated with each other (Q3).

Referring to Fig. 7B and Fig. 8B, an installation angle $\theta$ which is defined by an offset angle of a process unit 1 from the loader's coordinate system may be determined by the image processor 42 based on comparison between one of the marker lines Mb of the corresponding marker M and a coordinate axis of the loader's coordinate system. The determined installation angle $\theta$ of a process unit 1 may be stored in the reference point locations memory unit 33, together with a coordinate of the reference point $O_U$ in the process unit 1 along the respective axes.

In the foregoing discussion, it is assumed that the coordinate of a reference point $O_U$ determined by the image processor 42 is directly stored in the reference point locations memory unit 33. However, a marker pole Mp may be used to improve the precision with which the coordinate of a reference point $O_U$ is determined. In such a case, a location of a reference point $O_U$ in a process unit 1 as determined in the same manner as in the foregoing discussion may be temporarily stored in the reference point locations memory unit 33 or in a different memory unit. Subsequently, a loader 3 (i.e., the loader head 15) may be caused to be moved to the location of a reference point $O_U$ as stored in the reference point locations memory unit 33 or in a different memory unit, and a chuck 17 connected to the loader head 15 may be caused to grip the corresponding marker pole Mp. The loader 3 may be caused to be moved at a speed and with a torque both limited to such a degree that enables the loader 3 to stop at a target marker pole Mp. The loader 3 will be caused to be adjustably moved if there is a difference between the location of a reference point $O_U$ as determined by image processing and the physical location of the corresponding marker pole Mp, thus in effect, being caused to move by an amount corresponding the difference.

Such an adjustable movement of the loader 3, while contacting with a marker pole Mp, may continue until the loader 3 is moved to a position where the loader 3 receives no reaction force from the marker pole Mp, at which point the marker pole Mp may be effectively gripped due to the operation of the loader 3. The position sensors 18($18_X$, $18_Y$, $18_Z$) may sense the coordinate of the position taken by the loader 3 along the respective axes where the marker pole Mp is thus effectively gripped, and the sensed coordinate may be confirmed as the coordinate of a location of the reference point $O_U$, in order to enable the coordinate to be stored in the relative locations memory unit 33. The coordinate of the vertical location (i.e., the Y-axis location) of the reference point $O_U$ may be determined based on the abutment of a bottom of a chuck 17 with the marker pole Mp, that is, the vertical position at which the bottom of chuck 17 comes into contact with the marker pole Mp. Such a configuration of gripping a marker pole Mp enables much more precise determination of the coordinate of a reference point $O_U$, even when the performance of the camera 41 and/or the processing capability of the image processor 42 is/are low. As for an installation angle $\theta$, such an installation angle $\theta$ may be determined by image processing and may be stored in the reference point locations memory unit 33.

In this way, a teaching operation of a location of positioning point(s) P in each one of the process units 1 may be carried out in response to reconfiguration (e.g., addition, removal and switching in position) of the process units 1 in the installation 2. The coordinate of positioning point(s) P in a process unit 1 in the loader's coordinate system may be determined based on the absolute coordinate of a reference point $O_U$ in the process unit 1 and the relative coordinate of the positioning point(s) P in the loader's coordinate system, with the latter being already taught.

With the aforementioned teaching operation done, each time the loader program 6 is executed by the loader program executer unit 7 to cause the loader 3 to be positioned at a positioning point P, the relative coordinate of this particular positioning point P in a process unit 1 may be added to an absolute coordinate of the location (i.e., location in the loader's coordinate system) of a reference point $O_U$ in the process unit 1. Here, the relative coordinate may be corrected with the corresponding installation angle $\theta$, before addition to an absolute coordinate of the location of a reference point $O_U$ in the process unit 1. More specifically, on the condition that both of a process unit 1 and the loader 3 are installed horizontally, the process unit 1 may have an installation angle $\theta$ that has a value other than zero, in which case, offset of a coordinate of positioning point(s) P occurs by a value corresponding to an arc of the installation angle $\theta$ about the reference point $O_U$. Thus, the coordinate may be corrected with the installation angle $\theta$ which corresponds to such an offset angle, according to the following formulas:

$$X^2 + Z^2 = r^2$$

$$X = r\cos\theta, \; Z = r\sin\theta$$

In this way, the aforementioned workpiece processing system may, if reconfiguration (e.g., addition, removal or switching in position) of process units 1 takes place in the installation 2, determine the location of a single reference point $O_U$ in each one of the process units 1 through the recognition of a marker M associated with the each one of the process units 1, thus eliminating the need to perform identification and teaching of individual positioning points P one by one which requires complicated processing. Furthermore, a common marker M may be used among different process units 1 for recognition of a reference point $O_U$. This is much simpler than having to recognize and distinguish positioning points P with different shapes, locations and orientations. This allows for performing a teaching operation that is fast and simple, in response to reconfiguration in the installation 2 of the process units 1. This also maximizes enhanced reconfiguration efficiency in an installation 2 which may be one of the biggest advantages accorded by reconfigurable units.

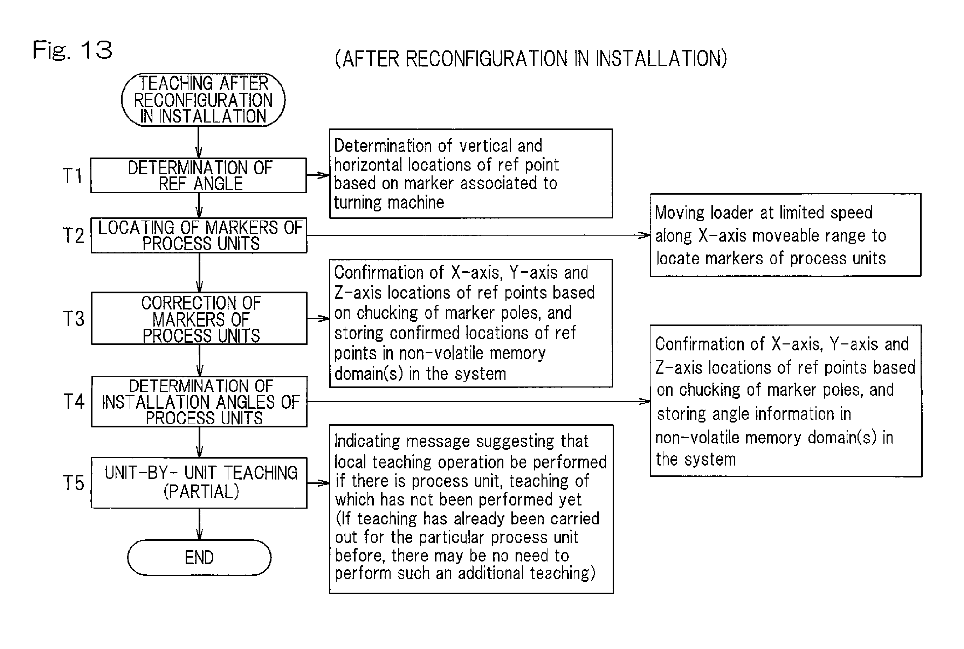

Next, the preparation step Q1 as shown in Fig. 10 will be described in connection with Fig. 11 and Fig. 12. Furthermore, the details of steps such as the steps Q2, Q3 which may be performed in response to reconfiguration in the installation will be described in connection with Fig. 13. Typically, in the course of manufacturing, shipping and installation of a workpiece processing system, the system may be temporarily assembled at a factory where the system is manufactured to perform as much teaching as possible, followed by shipping and installation of the system at a user's facility.

Fig. 11 illustrates procedures that may be carried out at a factory where a workpiece processing system is manufactured.

At a factory where a workpiece processing system is manufactured, an installation 2 of process units of a workpiece processing system may be assembled to determine a reference angle (R1). In this procedure, a marker reader 21 may be operated to read a marker M of a primary process unit $1_0$ which may include a turning machine or lathe, to determine a vertical location and a horizontal location of a reference point $O_U$ in the primary process unit $1_0$. A loader 3's coordinate system may be created by defining the determined vertical and horizontal locations of the reference point $O_U$ as the origin of the coordinate system. The procedure R1 may be performed by the reference angle determiner 52 such as shown in Fig. 2A.

Subsequently, in a procedure (R2), a marker M of each one of the process units 1 may be read to locate the marker M of the each one of the process units 1. In this procedure, the loader 3 may be caused to be moved at a limited speed along a moveable range of the loader 3 along the X-axis direction, to allow the marker reader 21 to read a marker M of the each one of the process units 1. The procedure R2 may be performed by the marker locator controller 53 such as shown in Fig. 2A.

Subsequently, correction of the located marker M of the each one of the process units 1 may be carried out (R3). More specifically, in a manner similar to the one described in connection with Fig. 10, the loader 3 may be caused to be moved to a provisional reference point $O_U$ of the each one of the process units 1 as determined based on the reading of the corresponding marker M in the procedure R2, and a vertically downwardly oriented chuck 17 of the loader 3 may be caused to perform chucking of a marker pole Mp of the corresponding marker M. The values detected, while the chucking of a marker pole Mp is being performed, by the position sensors ($18_X$, $18_Y$, $18_Z$) that may be configured to sense the X-axis position, the Y-axis position and the Z-axis position of the loader 3, respectively, may be used to confirm the X-axis, Y-axis and Z-axis positions of the loader 3 as a coordinate of a reference point $O_U$ of the corresponding process unit 1. The confirmed coordinate of the location of reference points $O_U$ may be stored in the reference point locations memory unit 33 which may be constituted by a non-volatile memory domain(s) in the loader's controller device 4. Such a correction procedure R3 may be performed by the corrector 54 such as shown in Fig. 2A.

Subsequently, an installation angle of each one of the process units 1 may be determined (R4). More specifically, an installation angle θ (Fig. 8B) of each one of the process units 1 in the loader 3's coordinate system created in the procedure R1 may be determined, during the course of performing chucking of a marker pole Mp and confirming the coordinate of the location of a reference point $O_U$ in the each one of the process units 1 in the aforementioned procedure R3. The determined installation angles θ may be stored in the reference point locations memory unit 33. The procedure R4 may be performed by the installation angle determiner 55 such as shown in Fig. 2A.

Subsequently, a process unit-by-process unit basis teaching may be carried out (R5). More specifically, the positioning point(s) P of each one of the process units 1 may be taught to subprograms 6B assigned to corresponding one of the process units 1. The coordinate of positioning point(s) P may be obtained by internal processing that may include bringing the installation angle of a process unit 1 in the loader's coordinate system to 0° to calculate a coordinate of the positioning point(s) P in the corresponding local coordinate system, which may be stored in a form that can be taught to the subprograms 6B assigned to that particular process unit 1. The procedure R5 may be performed by the unit-by-unit teaching subunit 56 such as shown in Fig. 2A.

Fig. 12 illustrates procedures that may be carried out after shipping and installing a workpiece processing system at a user's facility. The procedures in such a case may be the same as the procedures that may be carried out at a factory as described in connection with Fig. 11, except that a manual teaching operation of positioning point(s) P at the user's facility may not be necessary. After the installation 2 of process units 1 is installed, a reference angle may be determined (S1). In this procedure, a marker reader 21 may be operated to read a marker M of a primary process unit $1_0$ which may include a turning machine or lathe, to determine a vertical location and a horizontal location of a reference point $O_U$ in the primary process unit $1_0$. A loader 3's coordinate system may be created by defining the determined vertical and horizontal locations of the reference point $O_U$ as the origin of the coordinate system. In this way, the loader 3's coordinate system created at a factory such as described in connection with Fig. 11 may be updated. The procedure S 1 may be performed by the reference angle determiner 52 such as shown in Fig. 2A.

Subsequently, in a procedure (S2), a marker M of each one of the process units 1 may be read to locate the marker M of the each one of the process units 1. In this procedure, the loader 3 may be caused to be moved at a limited speed along a moveable range of the loader 3 along the X-axis direction, to allow the marker reader 21 to read a marker M of the each one of the process units 1. The procedure S2 may be performed by the marker locator controller 53 such as shown in Fig. 2A.

Subsequently, correction of the located marker M of the each one of the process units 1 may be carried out (S3). More specifically, in a manner similar to the procedure R3 described in connection with Fig. 11, the loader 3 may be caused to be moved to a provisional reference point $O_U$ of the each one of the process units 1 as determined based on the corresponding reading of the marker M in the procedure S2, and a vertically downwardly oriented chuck 17 of the loader 3 may be caused to perform chucking of a marker pole Mp of the corresponding marker M. The values detected, while the chucking of a marker pole Mp is being performed, by the position sensors ($18_X$, $18_Y$, $18_Z$) that may be configured to sense the X-axis position, the Y-axis position and the Z-axis position of the loader 3, respectively, may be used to confirm the X-axis, Y-axis and Z-axis positions of the loader 3 as a coordinate of a reference point $O_U$ of the corresponding process unit 1. The conformed coordinate of the location of reference points $O_U$ may be stored in the reference point locations memory unit 33 which may be included in the loader's controller device 4. In this way, the content of the reference point locations memory unit 33 may be updated. Such a correction procedure S3 may be performed by the corrector 54 such as shown in Fig. 2A.

Subsequently, an installation angle of each one of the process units 1 may be determined (S4). More specifically, in a manner similar to the procedure R4 described in connection with Fig. 11, an installation angle $\theta$ (Fig. 8B) of each one of the process units 1 in the loader 3's coordinate system created in the procedure S1 may be determined, during the course of performing chucking of a marker pole Mp and confirming the coordinate of the location of a reference point $O_U$ in the aforementioned procedure S3. The determined installation angles $\theta$ may be stored in the reference point locations memory unit 33. In this way, installation angles $\theta$ stored in the reference point locations memory unit 33 may be updated. The procedure S4 may be performed by the installation angle determiner 55 such as shown in Fig. 2A.

Note that, in the teaching procedures that may be carried out at a user's facility, a process unit-by-process unit basis teaching (R5) at a factory as described in connection with Fig. 11 may not be necessary. The coordinate of a location of positioning point(s) P in the local coordinate system defining the reference point $O_U$ in a process unit 1 as the origin of the coordinate system may already be taught to the subprograms 6B at a factory as described in connection with Fig. 11, and this coordinate of a location of positioning point(s) P may be used when causing the loader 3 to operate. In this way, the teaching operation after initial installation of the system is done, and the workpiece processing system is ready to operate.

Fig. 13 illustrates teaching procedures that may be carried out in response to reconfiguration, such as addition to, removal of or switching in position, of the installation 2 of the process units 1. In such a case, as is the case with the procedures that may be taken at a factory or after installation such as described in connection with Fig. 11 or Fig. 12, determination of a reference angle (T1), locating of markers of process units (T2), correction of markers of process units (T3), and determination of installation angles of process units (T4) may be carried out. The description of these procedures (T1 to T4) will be omitted because they are similar to the procedures S1 to S4 as described in connection with Fig. 12.

A process unit-by-process unit basis teaching procedure (T5) may be carried out only when it is necessary. For example, reconfiguration in the installation 2 of process units may include addition or incorporation of an extra process unit 1 where the extra process unit 1 has positioning point(s) P, teaching of which in the local coordinate system has not been performed yet. In such a case, a process unit-by-process unit basis teaching procedure may be performed with respect to the extra process unit 1. In the process unit-by-process unit basis teaching procedure, positioning point(s) P in each one of the process units 1 may be taught to the subprograms 6B assigned to the each one of the process units 1. The coordinate of positioning point(s) P to be taught may be obtained by internal processing that may include bringing the installation angle of a process unit 1 in the loader's coordinate system to 0° to calculate a coordinate of the positioning point(s) P in the corresponding local coordinate system, which may be stored in a form that can be taught to the subprograms 6B assigned to that particular process units 1. The procedure T5 may be performed by the unit-by-unit teaching subunit 56 such as shown in Fig. 2A.

Preferably, the loader controller device 4 includes a unit (not shown) configured to indicate a message, for example on a display screen, suggesting that a local teaching operation (i.e., determination of a relative location of positioning point(s) P with respect to a reference point) be performed, if there is a process unit 1 having positioning point(s) P, teaching of which in the local coordinate system has not been performed yet in response to reconfiguration in the installation 2. If the teaching of positioning point(s) P in the local coordinate system has already been carried out for the process unit 1 before, such an additional teaching operation may not be necessary in response to reconfiguration in the installation 2.

Thus, with a workpiece processing system according to the embodiment under discussion, once the teaching of positioning point(s) P in each one of the process units 1 in the local coordinate system has been done, the location of a reference point $O_U$ in each one of the process units 1 in the loader's coordinate system (i.e., an absolute coordinate system) may only have to be determined in response to reconfiguration in the installation 2 of process units 1, in order to carry out the teaching of the coordinate of a location of positioning point(s) P in each one of the process units 1 in the loader's coordinate system. This may provide a more efficient measure to teach positioning points in the process units to the loader if reconfiguration takes place in the installation.

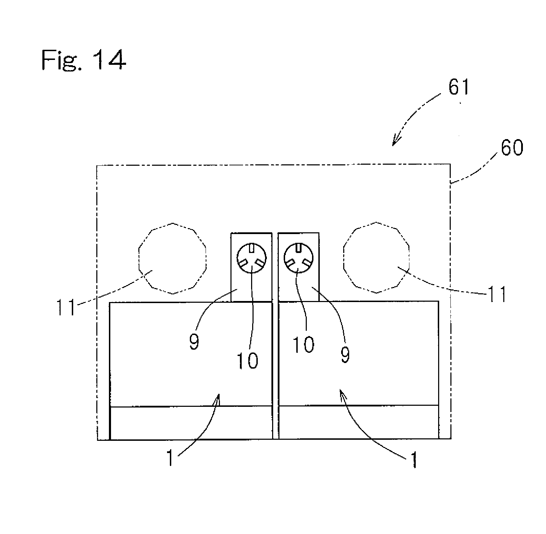

Fig. 14 illustrates a process unit 1 for a workpiece processing system according to the second embodiment of the present invention. In the second embodiment, two process units 1, each of which may include a single-spindle turning machine or lathe, in effect form a single machine tool 61 in terms of appearance and operation, that may be housed by a common machine cover 60. In the installation of process units including such a machine tool 61, each one process unit which may include a single-spindle turning machine, of the process units 1 forming the illustrated machine tool 61, may be added, disassembled or switched in position on a unit-by-unit basis. Thus, a workpiece processing system according to the present invention can also be applied to such a process unit 1.

Although the present invention has been described in connection with preferred embodiments with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from

## EP 2 719 500 A1

the scope of the present invention as delivered from the claims annexed hereto, to be construed as included therein.

[Reference Signs]

| | |
|---|---|
| 1, $1_0$, $1_A$ to $1_E$: | Process unit |
| 2: | Installation of process units |
| 3: | Loader |
| 4: | Loader controller device |
| 5, $5_0$, $5_A$, $5_B$: | Process unit controller device |
| 6: | Loader program |
| 6A: | Main program |
| 6B: | Subprogram |
| 15: | Loader head |
| 17: | Chuck |
| 18, $18_X$, $18_Y$, $18_Z$: | Position sensor |
| 19: | Loader carrier |
| 20: | Rail |
| 21: | Marker reader |
| 31: | Relative locations memory unit |
| 33: | Reference point locations memory unit |
| 32: | Teaching unit |
| 41: | Camera |
| 42: | Image processor |
| 44: | Transmitter |
| 51: | Markers and process units association memory |
| M: | Marker (protrusion) |
| Ma: | Marker substrate |
| Mb, Mc: | Marker line |
| Me: | Auxiliary marker segment |
| Mp: | Marker pole |
| $O_U$: | Reference point |
| P: | Positioning point |
| W: | Workpiece |

**Claims**

**1.** A workpiece processing system comprising:

an installation including a plurality of process units, the process units being integrated such that addition to, removal of or switching in position of the process units is possible on a unit-by-unit basis, each of the process units being configured to be used to implement a processing of a workpiece;
a loader configured to transfer the workpiece to and from the process units; and
a loader controller device configured to control the loader;
each of the process units having positioning point(s) for the loader, to and from which the loader transfers the workpiece under control of the loader controller device, at least one process unit of the process units having a plurality of the positioning point(s), the at least one process unit including a marker indicating a reference point in the at least one process unit;
the loader including a marker reader configured to read the marker of the at least one process unit to determine a location of the reference point in the at least one process unit;
the loader controller device including a relative locations memory unit configured to store a relative location of the positioning point(s) with respect to the reference point indicated by the marker of the each one of the process units;
the loader controller device being configured to calculate, based on the location of the reference point in the at least one process unit as read and determined by the marker reader and on the relative location of the positioning point(s) as stored in the relative locations memory unit, a location of the positioning point(s) in a loader's coordinate system, the loader controller device being also configured to position the loader at the calculated location of the positioning point(s) in the loader's coordinate system.

2. The workpiece processing system as claimed in Claim 1, wherein the marker reader includes a camera configured to capture an image of the marker from a vertically upward position and also includes an image processor configured to process the image captured by the camera to determine a vertical location of the marker.

3. The workpiece processing system as claimed in Claim 1, wherein the marker includes a protrusion extending vertically upwards,
wherein the marker reader includes a camera configured to capture an image of the marker and also includes an image processor configured to process the image captured by the camera to determine a location of the reference point, and
wherein the loader controller device includes a corrector configured to cause the loader to be moved to the determined location of the reference point, to cause the loader to be adjustably moved such that the loader takes a position where the loader couples with the protrusion without receiving any reaction force from the protrusion, and to confirm a detected location of the position taken by the loader as a location of the reference point.

4. The workpiece processing system as claimed in any one of Claims 1 to 3, wherein the marker includes a marker segment indicating the reference point in a corresponding one of the process units to which the marker is assigned, also includes a marker segment indicating an orientation of the corresponding one of the process units, and also includes marker segment(s) indicating a type of the corresponding one of the process units, and
wherein the marker reader is configured to read the marker to identify an angular offset of and a type of the corresponding one of the process units, in addition to determining a location of the reference point.

5. The workpiece processing system as claimed in Claim 4, wherein the marker segment(s) includes two marker lines extending along two adjacent sides of an oblong marker substrate, directions in which the two marker lines extend indicate an orientation of the corresponding one of the process units, and a right-angled intersection of the two marker lines indicates the reference point.

6. The workpiece processing system as claimed in Claim 4, wherein the marker further includes an auxiliary marker segment configured to provide assistance in the event that precise determination of a location of the reference point is not possible with the marker segment(s) alone.

7. The workpiece processing system as claimed in Claim 2 or 3, wherein the camera is detachable with respect to the loader,
wherein the camera includes a transmitter configured to wirelessly transmit the captured image, and
wherein the image processor is configured to process the captured image that is transmitted by the transmitter.

## Fig. 1

**LOADER CONTROLLER DEVICE** — 4

- PROCESS UNIT CONTROLLER DEVICE — 50, 5
- 5A
- 5B
- LOADER PROGRAM — 6
- RELATIVE LOCATIONS MEMORY — 31
- TEACHING — 32
- CORRECTOR — 54
- REF POINT LOCATIONS MEMORY — 33
- LOADER PROGRAM EXECUTER — 7
- IMAGE PROCESSOR

42 / 41 } 21 MARKER READER

3, 19, 15, 2, 20

W, 1E, 10, M, OU, 1B, 1C, 1D

UNIT E, UNIT O, UNIT A, UNIT B, UNIT C, UNIT D

POSITIONING POINT P

## Fig. 2A

SUBPROG MEMORY SEGMENT 43b

RELATIVE LOCATIONS MEMORY 31

6B

**SUBPROG**
POSITIONING POINT
POSITIONING POINT
POSITIONING POINT

P

**LOADER CONTROLLER DEVICE**

**LOADER PROG MEMORY**

LOADER PROG (FOR NORMAL OPERATION)

MAIN PROG

SUBPROG (PROCESS UNIT 1E)

SUBPROG (PROCESS UNIT 1A)

⋮

SUBPROG (PROCESS UNIT 1D)

LOADER PROG EXECUTER

6B

**TEACHING** — 32

MARKERS & PROCESS UNITS ASSOCIATION MEMORY — 51

REF ANGLE DETERMINER — 52

MARKER LOCATOR CONTROLLER — 53

CORRECTOR — 54

INSTALLATION ANGLE DETERMINER — 55

UNIT-BY-UNIT TEACHING — 56

REF POINT LOCATIONS MEMORY — 33

IMAGE PROCESSOR — 42

21 MARKER READER

Fig. 2B

51

| MARKERS & PROCESS UNITS ASSOCIATION MEMORY | | |
|---|---|---|
| INFORMATION OF THE MARKERS | TYPE OF PROCESS UNIT | SUBPROG# |
| · · · | · · · · · | · · · · · · · |
| · · · | · · · · · | · · · · · · · |

Fig. 2C

43b

SUBPROG MEMORY SEGMENT

6B

SUBPROG
(SUBPROG#)

·POSITIONING POINT
(RELATIVE COORDINATE)
·POSITIONING POINT
(RELATIVE COORDINATE)
·POSITIONING POINT
(RELATIVE COORDINATE)

RELATIVE LOCATIONS
MEMORY 31

(GROUPED BY TYPE OF PROCESS UNIT)

※ RELATIVE COORDINATE WITH RESPECT
TO REF POINT

EP 2 719 500 A1

Fig. 3

Fig. 4

Fig. 5

6A

6Aa

| N10 TRANSFER-IN CYCLE |
| N20 LEFT SPINDLE UNLOAD |
| N30 LEFT SPINDLE LOAD |
| N40 E CHUCK |
| N50 F CHUCK |
| N60 RIGHT SPINDLE UNLOAD |
| N70 RIGHT SPINDLE LOAD |
| N80 TRANSFER-OUT CYCLE |
| N90 NG CYCLE |

SYSTEM'S INTERNAL CYCLE THAT
NORMALLY STAYS INTACT

a   b   c

```
N10
G65 P8100 Q#100 R1
G65 P8101 Q#101 R1
G65 P8102 Q#102 R1
G65 P8103 Q#103 R1
G65 P8104 Q#104 R1
G65 P8105 Q#105 R1
G65 P8106 Q#106 R1
M99
```

```
N80
G65 P8200 Q#110 R1
G65 P8201 Q#111 R1
G65 P8202 Q#112 R1
G65 P8203 Q#113 R1
G65 P8204 Q#114 R1
G65 P8205 Q#115 R1
G65 P8206 Q#116 R1
M99
```

EP 2 719 500 A1

## Fig. 6

REF POINT AT CORNER FOR TEACHING

Ou

Mb

M

IMAGE OF PROCESS UNIT
AS VIEWED FROM
UPWARD POSITION

1

Mc

3

R

AREA TO BE CAPTURED IN IMAGE
AND COVERED BY MOVING LOADER
FOR ACQUISITION OF IDENTIFICATION INFO

Fig. 7A

MARKER POLE Mp

Fig. 7B

Fig. 8A

P
POSITIONING POINT
(LOCATION #1
TO BE TAUGHT)

Mb

REF POINT Ou

3

Mc

Md

M

Me

P
POSITIONING POINT
(LOCATION #2
TO BE TAUGHT)

Fig. 8B

P
POSITIONING POINT
(LOCATION #1
TO BE TAUGHT)

P
POSITIONING POINT
(LOCATION #2
TO BE TAUGHT)

Mb

REF POINT Ou

(X0,Z0)

3

Mc

Md

M

Me

(X2,Z2)

(X1,Z1)

θ

Z
Y
X

Fig. 9A

Fig. 9B

Fig. 10

```
        ┌─────────────────────────────────────┐
        │              TEACHING               │
        └─────────────────────────────────────┘
                          │
        ┌─────────────────────────────────────┐
   Q1   │           PREPARATION STEP          │
        └─────────────────────────────────────┘
                          │
        ┌─────────────────────────────────────┐
        │        DETERMINATION OF LOCATION    │
   Q2   │  OF REF POINT IN EACH PROCESS UNIT  │
        └─────────────────────────────────────┘
                          │
        ┌─────────────────────────────────────┐
        │          STORING IN REF POINT       │
   Q3   │          LOCATIONS MEMORY           │
        └─────────────────────────────────────┘
                          │
        ┌─────────────────────────────────────┐
        │                 END                 │
        └─────────────────────────────────────┘
```

**Fig. 11**

(AT FACTORY)

```
        ( TEACHING )
              │
              ▼
R1   ┌──────────────────────┐      ┌─────────────────────────────┐
     │  DETERMINATION OF    │────▶│ Determination of vertical and│
     │     REF ANGLE        │      │ horizontal locations of ref  │
     └──────────────────────┘      │ point based on marker        │
              │                     │ associated to turning machine│
              ▼                     └─────────────────────────────┘
R2   ┌──────────────────────┐                                      ┌─────────────────────────────┐
     │ LOCATING OF MARKERS OF│───────────────────────────────────▶│ Moving loader at limited speed│
     │   PROCESS UNITS       │                                      │ along X-axis moveable range to│
     └──────────────────────┘                                      │ locate markers of process units│
              │                     ┌─────────────────────────────┐ └─────────────────────────────┘
              ▼                     │ Confirmation of X-axis, Y-axis│
R3   ┌──────────────────────┐      │ and Z-axis locations of ref   │
     │   CORRECTION OF       │────▶│ points based on chucking of   │
     │    MARKERS OF         │      │ marker poles, and storing     │
     │   PROCESS UNITS       │      │ confirmed locations of ref    │
     └──────────────────────┘      │ points in non-volatile memory │
              │                     │ domain(s) in the system       │   ┌─────────────────────────────┐
              ▼                     └─────────────────────────────┘   │ Confirmation of X-axis, Y-axis│
R4   ┌──────────────────────┐                                          │ and Z-axis locations of ref   │
     │  DETERMINATION OF     │─────────────────────────────────────▶│ points based on chucking of   │
     │ INSTALLATION ANGLES OF│                                          │ marker poles, and storing     │
     │   PROCESS UNITS       │                                          │ angle information in          │
     └──────────────────────┘                                          │ non-volatile memory domain(s) │
              │                     ┌─────────────────────────────┐   │ in the system                 │
              ▼                     │ Teaching, to subprograms      │   └─────────────────────────────┘
R5   ┌──────────────────────┐      │ assigned to each process unit,│
     │    PROCESS            │────▶│ corresponding coordinates     │
     │ UNIT-BY-PROCESS       │      │ computed by internal          │
     │  UNIT TEACHING        │      │ processing including bringing  │
     └──────────────────────┘      │ installation angles in        │
              │                     │ loader's coordinate system to │
              ▼                     │ 0°                            │
          ( END )                   └─────────────────────────────┘
```

EP 2 719 500 A1

# Fig. 12

(AFTER INSTALLATION)

```
   ┌─────────────────────┐
   │  TEACHING AFTER     │
   │   INSTALLATION      │
   └─────────────────────┘
            │
            ▼
S1 ┌─────────────────────┐      ┌────────────────────────────────┐
   │  DETERMINATION OF   │─────▶│ Determination of vertical and  │
   │     REF ANGLE       │      │ horizontal locations of ref point│
   └─────────────────────┘      │ based on marker associated to  │
            │                   │ turning machine                │
            ▼                   └────────────────────────────────┘
S2 ┌─────────────────────┐                              ┌────────────────────────────────┐
   │ LOCATING OF MARKERS OF│────────────────────────────▶│ Moving loader at limited speed │
   │   PROCESS UNITS     │                              │ along X-axis moveable range to │
   └─────────────────────┘                              │ locate markers of process units│
            │                   ┌────────────────────────────────┐
            ▼                   │ Confirmation of X-axis, Y-axis and│
S3 ┌─────────────────────┐      │ Z-axis locations of ref points based│
   │   CORRECTION OF     │─────▶│ on chucking of marker poles, and │
   │    MARKERS OF       │      │ storing confirmed locations of ref│
   │  PROCESS UNITS      │      │ points in non-volatile memory  │
   └─────────────────────┘      │ domain(s) in the system        │
            │                   └────────────────────────────────┘
            ▼
S4 ┌─────────────────────┐                              ┌────────────────────────────────┐
   │  DETERMINATION OF   │──────────────────────────────▶│ Confirmation of X-axis, Y-axis and│
   │ INSTALLATION ANGLES OF│                            │ Z-axis locations of ref points based│
   │   PROCESS UNITS     │                              │ on chucking of marker poles, and │
   └─────────────────────┘                              │ storing angle information in   │
            │                                           │ non-volatile memory domain(s) in│
            ▼                                           │ the system                     │
   ┌─────────────────────┐                              └────────────────────────────────┘
   │        END          │
   └─────────────────────┘
```

EP 2 719 500 A1

# Fig. 13

## (AFTER RECONFIGURATION IN INSTALLATION)

```
        ┌─────────────────────┐
        │  TEACHING AFTER     │
        │  RECONFIGURATION    │
        │  IN INSTALLATION    │
        └─────────────────────┘
                  │
                  ▼
```

T1 — DETERMINATION OF REF ANGLE → Determination of vertical and horizontal locations of ref point based on marker associated to turning machine

T2 — LOCATING OF MARKERS OF PROCESS UNITS → Moving loader at limited speed along X-axis moveable range to locate markers of process units

T3 — CORRECTION OF MARKERS OF PROCESS UNITS → Confirmation of X-axis, Y-axis and Z-axis locations of ref points based on chucking of marker poles, and storing confirmed locations of ref points in non-volatile memory domain(s) in the system

T4 — DETERMINATION OF INSTALLATION ANGLES OF PROCESS UNITS → Confirmation of X-axis, Y-axis and Z-axis locations of ref points based on chucking of marker poles, and storing angle information in non-volatile memory domain(s) in the system

T5 — UNIT-BY-UNIT TEACHING (PARTIAL) → Indicating message suggesting that local teaching operation be performed if there is process unit, teaching of which has not been performed yet (If teaching has already been carried out for the particular process unit before, there may be no need to perform such an additional teaching)

```
        ┌─────────────────────┐
        │        END          │
        └─────────────────────┘
```

Fig. 14

## INTERNATIONAL SEARCH REPORT

| | International application No. |
|---|---|
| | PCT/JP2012/063461 |

### A. CLASSIFICATION OF SUBJECT MATTER
*B23Q41/02*(2006.01)i, *B23Q7/14*(2006.01)i

According to International Patent Classification (IPC) or to both national classification and IPC

### B. FIELDS SEARCHED

Minimum documentation searched (classification system followed by classification symbols)
B23Q41/02, B23Q7/14

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2006-26818 A (Toyota Industries Corp.),<br>02 February 2006 (02.02.2006),<br>paragraphs [0018], [0020]; fig. 1 to 2<br>(Family: none) | 1-2,4-7<br>3 |
| Y<br>A | JP 4-40506 A (Murata Machinery Ltd.),<br>10 February 1992 (10.02.1992),<br>page 2, lower left column, lines 5 to 15;<br>fig. 1<br>(Family: none) | 1-2,4-7<br>3 |
| Y<br>A | JP 4-330504 A (Murata Machinery Ltd.),<br>18 November 1992 (18.11.1992),<br>paragraphs [0008] to [0009]; fig. 1, 3<br>(Family: none) | 1-2,4-7<br>3 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>06 August, 2012 (06.08.12) | Date of mailing of the international search report<br>14 August, 2012 (14.08.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/063461

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2004-1153 A (Matsushita Electric Industrial Co., Ltd.),<br>08 January 2004 (08.01.2004),<br>paragraphs [0043], [0046] to [0053]; fig. 1, 3 to 5<br>(Family: none) | 1-2,4-7<br>3 |
| Y | JP 2009-125839 A (Nachi-Fujikoshi Corp.),<br>11 June 2009 (11.06.2009),<br>paragraph [0031]<br>(Family: none) | 7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011127897 A
- JP H07001298 A
- JP H05208335 A